# EUROPÄISCHE PATENTSCHRIFT

(11) **EP 2 131 210 B1**
(45) Veröffentlichungstag und Bekanntmachung des Hinweises auf die Patenterteilung: **03.04.2013**
(21) Anmeldenummer: 09007125.9
(22) Anmeldetag: 28.05.2009
(51) Int. Cl.: G01S 13/89, G01S 13/90, B64G 1/10, B64G 1/24

(54) **Verfahren zum Optimieren des Betriebs eines aktiven Seitensichtsensors bei veränderlicher Höhe über der zu erfassenden Oberfläche**
Method for optimising the operation of an active side view sensor at varying heights above the surface to be recorded
Procédé d'optimisation du fonctionnement d'un capteur de vue latérale actif à hauteur variable au-dessus de la surface à détecter

(30) Priorität: 03.06.2008 DE 102008026497
(43) Veröffentlichungstag der Anmeldung: 09.12.2009
(73) Patentinhaber: Astrium GmbH, 82024 Taufkirchen (DE)
(72) Erfinder: Völker, Michael, 88090 Immenstaad (DE)
(74) Vertreter: Hummel, Adam

(56) Entgegenhaltungen:
- WO-A1-2004/104630
- US-A- 4 280 127
- HENRY J C ED - INSTITUTE OF ELECTRICAL AND ELECTRONICS ENGINEERS: "The Lincoln Laboratory 35 GHz airborne SAR imaging radar system" PROCEEDINGS OF THE NATIONAL TELESYSTEMS CONFERENCE. ATLANTA, MARCH 26 19910326; 19910326 - 19910327 NEW YORK, IEEE, US, Bd. -, 26. März 1991 (1991-03-26), Seiten 353-358, XP010047053 ISBN: 978-0-7803-0062-0
- JOHNSON W T K: "MAGELLAN IMAGING RADAR MISSION TO VENUS" PROCEEDINGS OF THE IEEE, IEEE. NEW YORK, US, Bd. 79, Nr. 6, 1. Juni 1991 (1991-06-01), Seiten 777-790, XP000262352 ISSN: 0018-9219
- JOBEA CIMINO ET AL: "SIR-B-The Second Shuttle Imaging Radar Experiment" IEEE TRANSACTIONS ON GEOSCIENCE AND REMOTE SENSING, IEEE SERVICE CENTER, PISCATAWAY, NJ, US, Bd. 44, Nr. 4, 1. Juli 1986 (1986-07-01), Seiten 445-452, XP011159025 ISSN: 0196-2892
- STUHR F ET AL: "SIR-C/X-SAR: An Advanced Radar" AEROSPACE APPLICATIONS CONFERENCE, 1996. PROCEEDINGS., 1996 IEEE ASPEN, CO, USA 3-10 FEB. 1996, NEW YORK, NY, USA,IEEE, US, Bd. 2, 3. Februar 1996 (1996-02-03), Seiten 5-16, XP010159025 ISBN: 978-0-7803-3196-9

## Beschreibung

Die Erfindung betrifft ein Verfahren zum Optimieren des Betriebs eines aktiven Seitensichtsensors bei veränderlicher Höhe über der zu erfassenden Oberfläche gemäß Anspruch 1.

Aktive Seitensichtsensoren bzw. Seitensichtinstrumente arbeiten auf dem Prinzip der Laufzeitmessung mittels RADAR (Radiowave Detection And Ranging) oder LIDAR (Lightwave Range And Detection) und werden beispielsweise zur Vermessung und Abbildung der Erdoberfläche mittels Satelliten eingesetzt. Ein Beispiel für einen aktiven Seitensichtsensor ist das Synthetische-Apertur-Radar (SAR)-System, das auch als Seitensichtradar bezeichnet wird. SAR-Systeme werden so betrieben, dass abwechselnd Impulssignale über eine kurze bewegte Antenne in Richtung zur zu erfassenden Oberfläche in einem definierten Zeitabstand abgestrahlt und die Echosignale, also die an abgetasteten Objekten reflektierten Impulssignale empfangen werden. Für jeden von der Antenne ausgeleuchteten und abgetasteten Bereich wird von einem SAR-Prozessor durch entsprechende Datenverarbeitung der Echosignale eine Abbildung des abgetasteten Objekts berechnet.

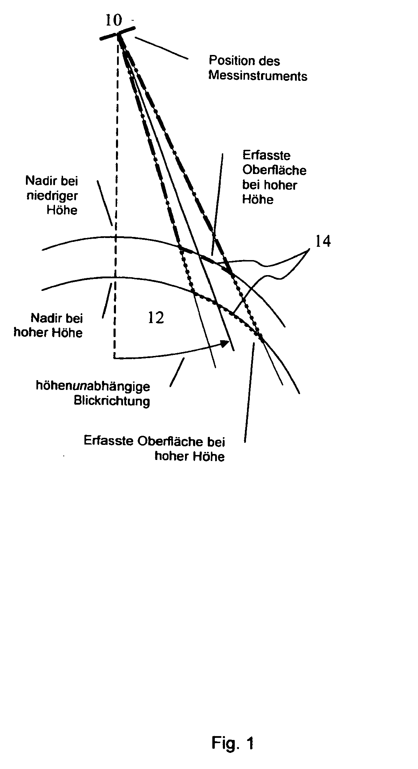

Seitensichtsensoren wie beispielsweise SAR-Systeme beleuchten mit ihren abgestrahlten Impulssignalen einen und empfangen Echosignale aus einem Bereich bzw. Streifen (swath) einer zu erfassenden bzw. vermessenden Oberfläche (oder eines Atmosphärenvolumens) querab zur Flugrichtung. Über die gesamte Umlaufbahn eines Sensors bleibt die Blickrichtung des Sensors, d.h. die die Richtung der ausgesandten Impulssignale (Abtaststrahlen) üblicherweise gleich - beispielsweise im Sinne einer Orientierung relativ zur Flug- und Nadirrichtung. Auch wenn verschiedene Streifen definiert werden (Blickwinkelbereiche), die wahlfrei ausgewählt werden können (z. B. mit Hilfe einer phasengesteuerten RADAR-Antenne), so bleibt die Orientierung eines jeden Streifens für sich über den gesamten Umlauf (Orbit) des Sensors um den zu vermessenden Himmelskörper gleich. Allerdings variiert der Abstand zwischen einem Seitensichtsensor und der zu erfassenden Oberfläche auf elliptischen Bahnen und um nicht kugelsymmetrische Himmelskörper, wie in Fig. 1 erkennbar ist.

Das Zeitverhalten während einer Aufnahme bzw. Abtastung hängt daher erheblich von der Höhe über der Messoberfläche und vom zu erfassenden Bereich ab. Wird beispielsweise ein aktiver Seitensichtsensor so betrieben, dass abwechselnd Impulssignale abgestrahlt werden und nur während der Sendepausen die Echosignale empfangen werden können, so muss die Pulswiederholfrequenz (PRF: Pulse Repetition Frequency), d.h, die Frequenz der Abstrahlung von Impulssignalen während eines Orbits ständig angepasst werden. Dies erhöht allerdings die Komplexität der Steuerung der Abtastung beträchtlich. In einem zu erfassenden Zugriffsbereich mit beispielsweise einem Einfallswinkel von 20° bis 55° der von einem Seitensichtsensor ausgesandten Abtaststrahlen auf der zu vermessenden Oberfläche wird in eine Anzahl von überlappenden individuell wählbaren Streifen gelegt, deren Lage im Sinne des Einfallswinkels oder Blickwinkels über den gesamten Orbit ähnlich bleibt. Die aufgrund der Signallaufzeit möglichen Werte für die PRF variieren über den Orbit. Eine feste PRF für jeden Streifen (swath) ist oft nicht möglich.

Die Veröffentlichung "The Lincoln Laboratory 35 GHz airborne SAR imaging radar system", HENRY J C ED - INSTITUTE OF ELECTRICAL AND ELECTRONICS ENGINEERS PROCEEDINGS OF THE NATIONAL TELESYSTEMS CONFERENCE. ATLANTA, MARCH 26 19910326; 19910326 - 19910327 NEW YORK, IEEE. US, Bd, -, 26. März 1991 (1991-03-26), Seiten 353-358, XP010047053 ISBN: 978-0-7803-0062-0, beschreibt ein Flugzeug-gestütztes SAR-System. Im Kapitel 2,4 (und den Unterkapiteln) dieser Veröffentlichung wird das System zur Flugzeuglokalisierung beschrieben. Mit mehreren Instrumenten werden die Lage und Geschwindigkeit des Flugzeugs gemessen und die Geschwindigkeitsinformation wird für die Antennenbewegungskompensation verwendet. Eine Höhenermittlung mit einem barometrischen Altimeter wird benutzt, um vertikale Positionierungsfehler in einem Bewegungssensierungsfilter zu entfernen.

Die WO2004/104630A1 offenbart ein SAR-System, bei dem mehrere Radarstrahlen zum Abbilden einer zu erfassenden Oberfläche benutzt werden und eine Verarbeitungseinrichtung Roll-, Neigungs- und Gier-Richtungsdaten in Verbindung mit dem Radar verarbeiten kann. Die Richtungsdaten werden durch Ableiten der Fluglagelnformation und durch selektive Eingabe von Geländeelevationsdaten bestimmt, um so Variationen in der Radarsichtgeometrie mit einer Geländeelevation berücksichtigen zu können. Aufgabe der vorliegenden Erfindung ist es daher, ein Verfahren zum Optimieren des Betriebs eines aktiven Seitensichtsensors bei veränderlicher Höhe über der zu erfassenden Oberfläche vorzuschlagen,

Diese Aufgabe wird durch ein Verfahren zum Optimieren des Betriebs eines aktiven Seitensichtsensors bei veränderlicher Höhe über der zu erfassenden Oberfläche mit den Merkmalen von Anspruch 1 gelöst, Weitere Ausgestaltungen der Erfindung sind Gegenstand der abhängigen Ansprüche.

Ein wesentlicher Gedanke der Erfindung besteht nun darin, dass in Abhängigkeit von der ermittelten Höhe eines Seitensichtsensors die vom Seitensichtsensor abgestrahlten Abtaststrahlen zum Abtasten einer zu erfassenden Oberfläche durch eine Rollrotation derart eingestellt werden, dass die Variation der zu erfassenden Oberfläche über den Orbit des Seitensichtsensors verringert wird. Mit anderen Worten schlägt die vorliegende Erfindung also die Anwendung eines Rollgesetzes zum Ausrichten einer Antenne eines Seitensichtsensors zum Festlegen eines auszuleuchtenden Streifens einer zu erfassenden Oberfläche vor. Dadurch kann Im Unterschied zu einer starren Antennenausrichtung der Seitensichtsensor über längere Abschnitte im Orbit mit konstanter PRF betrieben werden, der Betrieb also insbesondere hinsichtlich der Komplexität der Steuerung der Abtastung der zu erfassenden Oberfläche optimiert werden. Weiterhin kann ein Antennenstrahl pro abzutastenden Streifen der zu erfassenden Oberfläche über den gesamten Orbit des Seitensichtsensors ausreichen.

Die Erfindung betrifft nun gemäß einer Ausführungsform ein Verfahren zum Optimieren des Betriebs eines aktiven Seitensichtsensors bei veränderlicher Höhe über der zu erfassenden Oberfläche mit den folgenden Schritten:
- fortlaufendes Ermitteln der Höhe des Seitensichtsensors über der zu erfassenden Oberfläche und
- Einstellen der vom Seitensichtsensor abgestrahlten Abtaststrahlen zum Abtasten der zu erfassenden Oberfläche durch Rollrotieren (roll steering law) in Abhängigkeit von der ermittelten Höhe des Seitensichtsensors derart, dass eine Variation der zu erfassenden Oberfläche über den Orbit des Seitensichtsensors verringert wird. Dies ermöglicht eine Vereinfachung der Steuerung der Abtastung der zu erfassenden Oberfläche, da ein Betrieb mit konstanter PRF über längere Abschnitte des Orbits des Seitensichtsensors als Optimierung gemäß dieser Ausführungsform der Erfindung erfolgen kann.

Das Einstellen durch Rollrotieren kann gemäß einer Ausführungsform der Erfindung eine mechanische Drehung des Seitensichtsensors umfassen.

In einer Ausführungsform der Erfindung kann alternativ oder auch zusätzlich das Einstellen durch Rollrotieren ein elektronisches Rollrotieren der abgestrahlten Abtaststrahlen durch entsprechende Ansteuerung einer Antenne des Seitensichtsensors umfasst.

Gemäß einer Ausführungsform der Erfindung kann das Einstellen durch Rollrotieren ein Schwenken der vom Seitensichtsensor erfassten Richtung abhängig von der zu erfassenden Oberfläche umfassen.

Gemäß einer weiteren Ausführungsform der Erfindung kann das Einstellen durch Rollrotieren das Einhalten eines festen Abstands zwischen Seitensichtsensor und erfasster Oberfläche umfassen.

Weiterhin kann gemäß einer Ausführungsform der Erfindung das Einstellen durch Rollrotieren das Einhalten einer festen Breite eines vom Seitensichtsensor ausgeleuchteten Streifens der zu erfassenden Oberfläche umfassen.

Das Einstellen durch Rollrotieren kann ferner gemäß einer Ausführungsform der Erfindung eine für alle vom Seitensichtsensor ausgeleuchteten Streifen im Zugriffsbereich gemeinsame Variation eines Blickwinkels über den Orbit des Seitensichtsensors umfassen.

Ferner kann gemäß einer Ausführungsform der Erfindung die Orientierung des Seitensichtsensors entsprechend seiner Orbitalposition durch Gieren und Neigen derart angepasst werden, dass eine Null-Doppler-Aufnahmegeometrie über den gesamten Zugriffsbereich des Seitensichtsensors gewährleistet wird.

Die Erfindung betrifft in einer weiteren Ausführungsform eine Vorrichtung zum Optimieren des Betriebs eines aktiven Seitensichtsensors bei veränderlicher Höhe über der zu erfassenden Oberfläche, wobei die Vorrichtung zur Ausführung eines Verfahrens nach der Erfindung und wie oben erläutert ausgebildet ist und folgendes aufweist:
- erste Mittel zum fortlaufenden Ermitteln der Höhe des Seitensichtsensors über der zu erfassenden Oberfläche und
- zweite Mittel zum Einstellen der vom Seitensichtsensor abgestrahlten Abtaststrahlen zum Abtasten der zu erfassenden Oberfläche durch Rollrotieren derart, dass eine Variation der zu erfassenden Oberfläche über den Orbit des Seitensichtsensors verringert wird. Die Vorrichtung kann beispielsweise als in einen Satelliten integrierbares Modul ausgebildet sein.

Schließlich betrifft die Erfindung gemäß einer Ausführungsform einen Seitensichtsensor, beispielsweise ein SAR-System, der dadurch gekennzeichnet ist, dass er eine Vorrichtung nach der Erfindung und wie vorstehend erläutert aufweist.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig.1: ein Seitensichtsensor, der die Oberfläche eines Himmelskörpers abtastet und die durch den Sensor erfasste Oberfläche bei zwei verschiedenen Höhen;
- Fig. 2A und 2B: unterschiedliche Roll-Orientierungen eines Seitensichtsensors für zwei unterschiedliche Höhen an unterschiedlichen Positionen entlang des Orbits des Sensors über der zu erfassenden Oberfläche;
- Fig. 3A und 3B: eine Überlagerung der in den beiden Fig. 2A und 2B dargestellten Messsituationen bei verschiedener vertikaler Referenz;
- Fig. 4: ein Flussdiagramm eines Ausführungsbeispiels eines Verfahrens zum Optimieren des Betriebs eines aktiven Seitensichtsensors bei veränderlicher Höhe über der zu erfassenden Oberfläche; und
- Fig. 5: ein stark vereinfachtes Blockschaltbild eines aktiven Seitensichtsensors mit einer Vorrichtung zum Optimieren des Betriebs des aktiven Seitensichtsensors bei veränderlicher Höhe über der zu erfassenden Oberfläche gemäß der Erfindung.

Im Folgenden können gleiche und/oder funktional gleiche Elemente mit den gleichen Bezugszeichen versehen sein.

Fig. 1 zeigt ein SAR-System bzw. einen SAR-Satelliten 10 als Beispiel eines Seitensichtsensors, der als Messinstrument zur Abtastung die Oberfläche eines Himmelskörpers 12 vorgesehen ist. Die durch den Sensor 10 erfasste Oberfläche des Himmelskörpers 12 ist bei zwei verschiedenen Höhen, nämlich bei niedriger und bei hoher Höhe des Sensors über der Oberfläche dargestellt. Die Blickrichtung des Sensors 10, d.h. die Richtung der von der Antenne des SAR-Satelliten abgestrahlten Abtast- bzw. Antennenstrahlen ist hierbei höhenunabhängig. Die Blickrichtung kann über den Blickwinkel α angegeben werden, d.h. den Winkel zwischen der Hauptrichtung der Antennenstrahlen und dem Nadir.

Das von den Abtast- bzw. Antennenstrahlen ausgeleuchtete und durch den Sensor 10 zu erfassende Gebiet 14 auf der Oberfläche des Himmelskörpers 12 (zu erfassendes Schrägentfernungsintervall eines Streifens (swath)) ist dagegen höhenabhängig. Daher variiert der vom Sensor 10 auf der Oberfläche des Himmelskörpers 12 ausgeleuchtete Streifen 14 mit dem Abstand des Sensors 10 von der Oberfläche, der wiederum vom Orbit des Sensors 10 abhängt. Auf elliptischen Bahnen und um nicht kugelsymmetrische Himmelskörper kann die Variation beträchtlich sein, beispielsweise kann aufgrund der Erdabplattung die Variation bei sonnensynchronen polaren Erdumlaufbahnen etwa 28 km betragen. Derartige Abstandsvariation bedingen normalerweise eine Variation der PRF und damit eine aufwendige Steuerung der Abtastung.

Die Orientierung eines SAR-Satelliten 10 kann gemäß einem yaw- and pitch steering law (Gier- und Neige-Steuervorschrift) entsprechend seiner Orbitposition angepasst werden, damit eine "Null-Doppler-Aufnahmegeometrie" über den gesamten Zugriffsbereich gewährleistet werden kann. Dies ist von Vorteil für die SAR-Prozessierung, d.h. die Verarbeitung der vom SAR-Satelliten 10 empfangenen Echosignale.

Um die Variation des durch den SAR-Satelliten 10 zu erfassenden Schrägentfernungsintervalls eines Streifens 14 über den Orbit zu verringern, kann nun erfindungsgemäß abhängig von der Höhe des SAR-Satelliten über der Oberfläche eine mechanische (oder elektronische) Rollrotation (Rollgesetz - roll steering law) der verwendeten Antennenstrahlen durchgeführt werden. Diese Rollrotation erlaubt bei Bedarf zusätzlich eine Bewegung um die anderen Achsen, um die "Null-Doppler-Aufnahmegeometrie" zu erreichen, wie oben beschrieben.

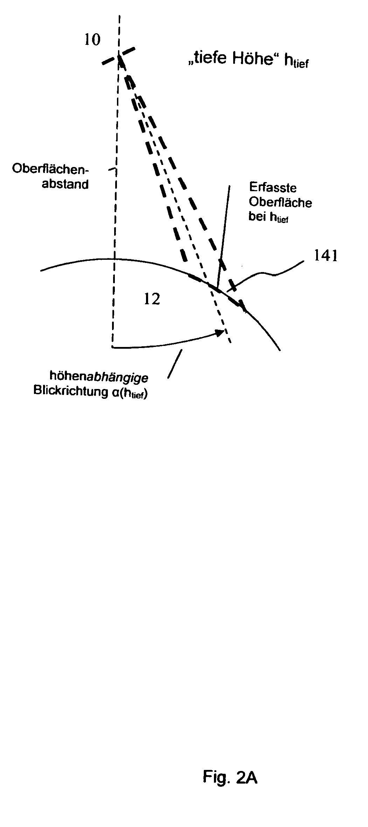

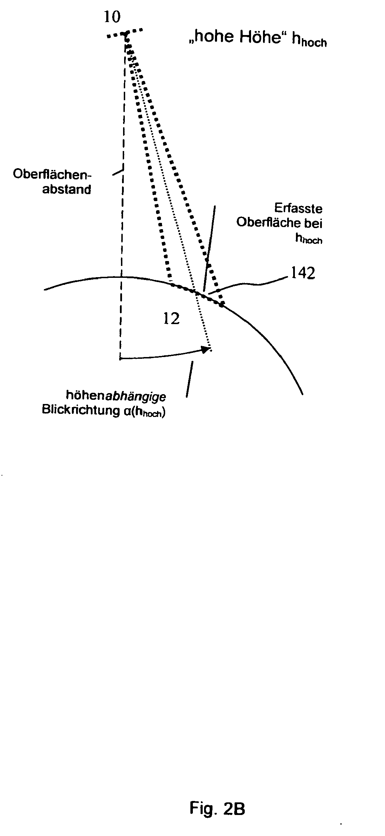

Fig. 2 zeigt unterschiedliche Roll-Orientierungen der Antennenstrahlen für zwei unterschiedliche Höhen (an unterschiedlichen Positionen entlang des Orbits) des SAR-Satelliten 10 über der Messoberfläche des Himmelskörpers 12. In Fig. 2A ist eine Roll-Orientierung bei einer "tiefen" Höhe h_{tief} des Messinstruments bzw. SAR-Satelliten über der erfassten Oberfläche, in Fig. 2B eine Roll-Orientierung bei einer "hohen" Höhe h_{hoch} dargestellt Das bei den beiden unterschiedlichen Roll-Orientierungen erfasste Schrägentfernungsintervall eines Streifens ist mit 141 bzw. 142 bezeichnet.

Im Unterschied zu der in Fig. 1 dargestellten Situation, bei welcher keine Roll-Orientierung der Antennenstrahlen vorgenommen wurde, unterscheiden sich nun die Blickwinkel α(h_{tief}) und a(h_{hoch}) des SAR-Satelliten 10 und hängen von der Höhe des SAR-Satelliten über der erfassten Oberfläche aufgrund der in beiden Situationen unterschiedlichen Roll-Orientierungen der Antennenstrahlen ab. Die Rollrotation der Antennenstrahlen kann durch eine mechanische Drehung des gesamten Satelliten (roll steering law) oder/und durch ein streifenabhängiges zusätzliches Schwenken der vom Instrument erfassten Richtung bewirkt werden. Die nominelle Lage der ausgeleuchteten Streifen wandert entsprechend dem vom Messinstrument (Apertur bzw. Antenne) ausgeleuchteten Bereich.

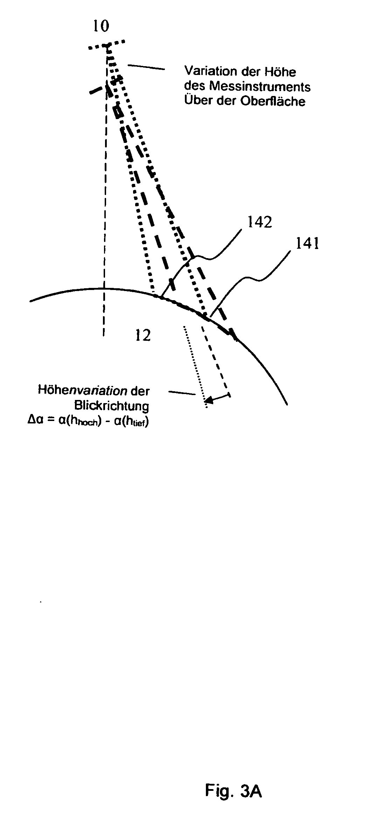

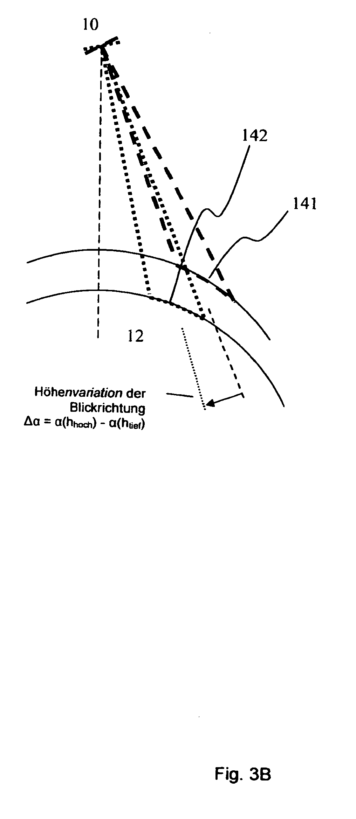

Die Abhängigkeit der Blickwinkel a des SAR-Satelliten 10 von der Höhe über der Messoberfläche wird von einer im SAR-Satelliten 10 implementierten Steuerung derart geregelt, dass eine Variation der mit den beiden unterschiedlichen Blickwinkeln erfassten Schrägentfernungsintervalle eines Streifens 141 und 142 möglichst wenig variieren, so dass die PRF über längere Abschnitte der Bahn des SAR-Satelliten 10 nahezu konstant bleiben kann. Fig. 3 zeigt die Überlagerung der beiden Darstellung von Fig. 2 bei verschiedener vertikaler Referenz: In Fig. 3A ist die Messoberfläche und in Fig. 3B die Position des Messinstruments fest

Die Änderung des Blickwinkels des SAR-Satelliten 10 über den Orbit nach den folgenden Beispielkriterien optimiert werden:
1. Das Einhalten eines festen Abstands zwischen Messinstrument und erfasster Oberfläche würde die größte Variation des Blickwinkels erfordern. Kleinere Blickwinkelvariationen vermindern zumindest die Abstandsvariationen.
2. Das Einhalten einer festen Breite des ausgeleuchteten Streifens ist mit kleineren Variationen des Blickwinkels möglich.
3. Eine für alle Streifen im Zugriffsbereich gemeinsame Variation des Blickwinkels über den Orbit kann mechanisch durch ein Rollgesetz durchgeführt werden. Eine Anpassung der Größe der Variation auf eine optimale Korrektur beim kritischsten Streifen (z. B. im Sinne der Punkte 1. und 2.) ist oft ein guter Kompromiss.

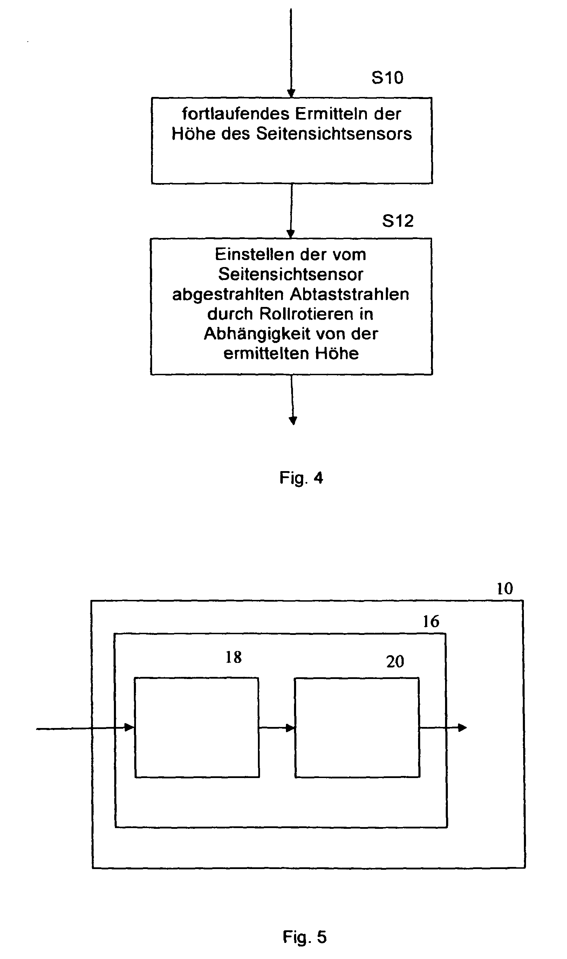

Fig. 4 zeigt nun ein Flussdiagramm eines Algorithmus, der beispielsweise von einer im SAR-Satelliten 10 implementierten Steuerung ausgeführt werden kann und er ermöglicht, den Betrieb des SAR-Satelliten 10 zu optimieren hinsichtlich einer möglichst konstanten PRF, In einem ersten Schritt S10 des Algorithmus wird fortlaufend die Höhe des SAR-Satelliten 10 über der zu erfassenden Oberfläche des Himmelskörpers 12 ermittelt. In einem darauf folgenden Schritt S12 werden dann die vom SAR-Satelliten 10 abgestrahlten Abtaststrahlen zum Abtasten der zu erfassenden Oberfläche durch Rollrotieren in Abhängigkeit von der ermittelten Höhe des Seitensichtsensors derart eingestellt, dass eine Variation der zu erfassenden Oberfläche über den Orbit des Seitensichtsensors verringert wird. Die kann dadurch erfolgen, dass abhängig von der ermittelten Höhe für einen bestimmten Blickwinkel die Größe eines erfassten Schrägentfernungsintervalls eines Streifens berechnet wird und der Blickwinkel abhängig von der Höhe derart verändert wird, dass das mit dem veränderten Blickwinkel erfasste Schrägentfernungsintervall eines Streifens eine Größe aufweist, die der für den bestimmten Blickwinkel berechneten Größe etwa entspricht.

Fig. 5 zeigt noch ein stark vereinfachtes Blockschaltbild einer Vorrichtung 16 zum Optimieren des Betriebs eines aktiven Seitensichtsensors, die beispielsweise als Modul ausgebildet und in einen SAR-Satelliten 10 implementiert sein kann. Die Vorrichtung 16 weist erste Mittel 18 zum fortlaufenden Ermitteln der Höhe des Seitensichtsensors über der zu erfassenden Oberfläche und zweite Mittel 20 auf, die ausgebildet sind zum Einstellen der vom Seitensichtsensor abgestrahlten Abtaststrahlen zum Abtasten der zu erfassenden Oberfläche durch Rollrotieren in Abhängigkeit von der ermittelten Höhe des Seitensichtsensors derart, dass eine Variation der zu erfassenden Oberfläche über den Orbit des Seitensichtsensors verringert wird. Die Mittel 18 und 20 können entweder in Hard- oder Software oder zumindest teilweise in Hard- oder Software implementiert sein. Beispielsweise können sie durch einen Prozessor mit Speicher, in dem der in Fig. 4 skizzierte Algorithmus in Form eines durch den Prozessor ausführbaren Programms abgelegt ist, implementiert sein.

Verglichen mit einer starren Orientierung einer Antenne ermöglicht die Festlegung der auszuleuchtenden Streifen mit Hilfe eines Rollgesetzes gemäß der Erfindung insbesondere folgendes:
- Es lassen sich längere Abschnitte im Orbit mit konstanter PRF betreiben: im Beispiel von Sentinel-1 sogar konstant über den gesamten Orbit für fast alle Streifen. Weiterhin reduziert sich die Komplexität der Steuerung/Programmierung.
- Es kann genügen, ein und dieselbe Konfiguration des Messinstruments (Antennenstrahl) pro Streifen über den gesamten Orbit zu verwenden.

### Bezugszeichen

- 10: Seitensichtsensor
- 12: Himmelskörper
- 14: Schrägentfernungsintervall eines Streifens
- 141: Schrägentfernungsintervall eines Streifens
- 142: Schrägentfernungsintervall eines Streifens
- 16: Vorrichtung zum Optimieren des Betriebs eines aktiven Seitensichtsensors
- 18: erste Mittel der Vorrichtung 16
- 20: zweite Mittel der Vorrichtung 16
- S10-S12: Verfahrensschritte

## Patentansprüche

1. Verfahren zum Optimieren des Betriebs eines aktiven Seitensichtsensors (10) bei veränderlicher Höhe über der zu erfassenden Oberfläche (12) mit den folgenden Schritten:
- fortlaufendes Ermitteln der Höhe des Seitensichtsensors über der zu erfassenden Oberfläche (S10) und
- Einstellen der vom Seitensichtsensor abgestrahlten Abtaststrahlen zum Abtasten der zu erfassenden Oberfläche durch Rollrotieren in Abhängigkeit von der ermittelten Höhe des Seitensichtsensors derart, dass eine vom Abstand des Seitensichtsensors von der Oberfläche abhängige Variation eines ausgeleuchteten Streifens (14; 141, 142) der zu erfassenden Oberfläche über den Orbit des Seitensichtsensors verringert wird (S12).

2. Verfahren nach Anspruch 1,
**dadurch gekennzeichnet, dass**
das Einstellen durch Rollrotieren eine mechanische Drehung des Seitensichtsensors umfasst.

3. Verfahren nach Anspruch 1 oder 2,
**dadurch gekennzeichnet, dass**
das Einstellen durch Rollrotieren ein elektronisches Rollrotieren der abgestrahlten Abtaststrahlen durch entsprechende Ansteuerung einer Antenne des Seitensichtsensors umfasst.

4. Verfahren nach Anspruch 1, 2 oder 3,
**dadurch gekennzeichnet, dass**
das Einstellen durch Rollrotieren ein Schwenken der vom Seitensichtsensor erfassten Richtung abhängig von der zu erfassenden Oberfläche umfasst.

5. Verfahren nach Anspruch 1, 2, 3 oder 4,
**dadurch gekennzeichnet, dass**
das Einstellen durch Rollrotieren das Einhalten eines festen Abstands zwischen Seitensichtsensor und erfasster Oberfläche umfasst.

6. Verfahren nach einem der vorhergehenden Ansprüche,
**dadurch gekennzeichnet, dass**
das Einstellen durch Rollrotieren das Einhalten einer festen Breite eines vom Seitensichtsensor ausgeleuchteten Streifens der zu erfassenden Oberfläche umfasst.

7. Verfahren nach einem der vorhergehenden Ansprüche,
**dadurch gekennzeichnet, dass**
das Einstellen durch Rollrotieren eine für alle vom Seitensichtsensor ausgeleuchteten Streifen im Zugriffsbereich gemeinsame Variation eines Blickwinkels über den Orbit des Seitensichtsensors umfasst.

8. Verfahren nach einem der vorhergehenden Ansprüche,
**dadurch gekennzeichnet, dass**
ferner die Orientierung des Seitensichtsensors entsprechend seiner Orbitalposition durch Gieren und Neigen derart angepasst wird, dass eine Null-Doppler-Aufnahmegeometrie über den gesamten Zugriffsbereich des Seitensichtsensors gewährleistet wird.

9. Vorrichtung (16) zum Optimieren des Betriebs eines aktiven Seitensichtsensors (10) bei veränderlicher Höhe über der zu erfassenden Oberfläche (12), wobei die Vorrichtung zur Ausführung eines Verfahrens nach einem der vorhergehenden Ansprüche ausgebildet ist und folgendes aufweist:
- erste Mittel (18) zum fortlaufenden Ermitteln der Höhe des Seitensichtsensors über der zu erfassenden Oberfläche und
- zweite Mittel (20) zum Einstellen der vom Seitensichtsensor abgestrahlten Abtaststrahlen zum Abtasten der zu erfassenden Oberfläche durch Rollrotieren in Abhängigkeit von der ermittelten Höhe des Seitensichtsensors derart, dass eine vom Abstand des Seitensichtsensors von der Oberfläche abhängige Variation eines ausgeleuchteten Streifens (14; 141, 142) der zu erfassenden Oberfläche über den Orbit des Seitensichtsensors verringert wird.

10. Seitensichtsensor,
**dadurch gekennzeichnet, dass**
er eine Vorrichtung nach Anspruch 9 aufweist.

## Claims

1. Method for optimizing the operation of an active side view sensor (10) at a variable height above the surface (12) to be recorded, having the following steps:
- continuous determination of the height of the side view sensor above the surface (S10) to be recorded, and
- setting the scanning beams, emitted by the side view sensor, in order to scan the surface to be recorded by roll rotation as a function of the determined height of the side view sensor such that a variation in an illuminated swath (14; 141, 142) of the surface to be recorded which depends on the distance of the side view sensor from the surface is reduced over the orbit of the side view sensor (S12).

2. Method according to Claim 1, **characterized in that** the setting by roll rotation comprises a mechanical rotation of the side view sensor.

3. Method according to Claim 1 or 2, **characterized in that** the setting by roll rotation comprises an electronic roll rotation of the emitted scanning beams by appropriately driving an antenna of the side view sensor.

4. Method according to Claim 1, 2 or 3, **characterized in that** the setting by roll rotation comprises swinging the direction recorded by the side view sensor as a function of the surface to be recorded.

5. Method according to Claim 1, 2, 3 or 4, **characterized in that** the setting by roll rotation comprises setting a fixed distance between the side view sensor and the recorded surface.

6. Method according to one of the preceding claims, **characterized in that** the setting by roll rotation comprises maintaining a fixed width of a swath, illuminated by the side view sensor, of the surface to be recorded.

7. Method according to one of the preceding claims, **characterized in that** the setting by roll rotation comprises a variation, common to all swaths illuminated by the side view sensor in the access range, in a viewing angle over the orbit of the side view sensor.

8. Method according to one of the preceding claims, **characterized in that**, furthermore, the orientation of the side view sensor is adjusted in accordance with its orbital position by yawing and pitching in such a way that a zero Doppler recording geometry is ensured over the entire access range.

9. Device (16) for optimizing the operation of an active side view sensor (10) at a varying height above the surface (12) to be recorded, the device being designed for executing a method according to one of the preceding claims, and having the following:
- first means (18) for continuously determining the height of the side view sensor above the surface to be recorded, and
- second means (20) for setting the scanning beams, emitted by the side view sensor, in order to scan the surface to be recorded by roll rotation as a function of the determined height of the side view sensor such that a variation in an illuminated swath (14; 141, 142) of the surface to be recorded which depends on the distance of the side view sensor from the surface is reduced over the orbit of the side view sensor.

10. Side view sensor **characterized in that** it has a device according to Claim 9.

## Revendications

1. Procédé d'optimisation du fonctionnement d'un capteur de vue latérale actif (10) à une hauteur variable au-dessus de la surface à détecter (12) avec les étapes suivantes :
- détermination continue de la hauteur du capteur de vue latérale au-dessus de la surface à détecter (S10) et
- réglage des rayonnements d'exploration émis par le capteur de vue latérale pour l'exploration de la surface à détecter par roulis-rotation en fonction de la hauteur déterminée du capteur de vue latérale de manière à réduire (S12) une variation d'une bande éclairée (14 ; 141, 142) de la surface à détecter le long de l'orbite du capteur de vue latérale, qui dépend de la distance du capteur de vue latérale à la surface à détecter.

2. Procédé selon la revendication 1,
**caractérisé en ce que**
le réglage par roulis-rotation comporte une rotation mécanique du capteur de vue latérale.

3. Procédé selon la revendication 1 ou 2,
**caractérisé en ce que**
le réglage par roulis-rotation comporte un roulis-rotation électronique des rayonnements d'exploration émis, par l'intermédiaire de la commande correspondante d'une antenne du capteur de vue latérale.

4. Procédé selon la revendication 1, 2 ou 3,
**caractérisé en ce que**
le réglage par roulis-rotation comporte un basculement de la direction détectée par le capteur de vue latérale en fonction de la surface à détecter.

5. Procédé selon la revendication 1, 2, 3 ou 4,
**caractérisé en ce que**
le réglage par roulis-rotation comporte le maintien d'une distance fixe entre le capteur de vue latérale et la surface détectée.

6. Procédé selon une des revendications précédentes,
**caractérisé en ce que**
le réglage par roulis-rotation comporte le maintien d'une largeur fixe d'une bande de la surface à détecter, éclairée par le capteur de vue latérale.

7. Procédé selon une des revendications précédentes,
**caractérisé en ce que**
le réglage par roulis-rotation comporte pour toutes les bandes éclairées par le capteur de vue latérale dans le domaine d'accès, une variation collective d'un angle de vue le long de l'orbite du capteur de vue latérale.

8. Procédé selon une des revendications précédentes,
**caractérisé en ce que**
de plus, l'orientation du capteur de vue latérale correspondant à sa position orbitale est adaptée par lacets et inclinaison de manière à assurer une géométrie d'enregistrement Doppler nulle sur l'ensemble du domaine d'accès du capteur de vue latérale.

9. Dispositif (16) d'optimisation du fonctionnement d'un capteur de vue latérale actif (10) à une hauteur variable au-dessus de la surface à détecter (12), le dispositif pour l'exécution d'un procédé étant réalisé selon une des revendications précédentes et comporte les éléments suivants :
- des premiers moyens (18) pour la détermination continue de la hauteur du capteur de vue latérale au-dessus de la surface à détecter et
- des deuxièmes moyens (20) pour le réglage des rayonnements d'exploration émis par le capteur de vue latérale pour l'exploration de la surface à détecter par roulis-rotation en fonction de la hauteur déterminée du capteur de vue latérale de manière à réduire une variation d'une bande éclairée (14 ; 141, 142) de la surface à détecter le long de l'orbite du capteur de vue latérale, qui dépend de la distance du capteur de vue latérale à la surface.

10. Capteur de vue latérale
**caractérisé en ce qu'**il comporte un dispositif selon la revendication 9.
